# EUROPEAN PATENT APPLICATION

(11) **EP 2 226 755 A1**
(43) Date of publication of application: **08.09.2010**
(21) Application number: 08868114.3
(22) Date of filing: 25.12.2008
(51) Int. Cl.: G06Q 20/00

(54) **PORTABLE TERMINAL DEVICE, CHARGING MANAGEMENT COMPONENT, AND PROGRAM FOR CONTROLLING PORTABLE TERMINAL**

(30) Priority: 27.12.2007 JP 2007338321
(71) Applicant: Kyocera Corporation, Kyoto-shi Kyoto 612-8501 (JP)
(72) Inventor: UENO, Yasuhiro, Kanagawa 224-8502 (JP)
(74) Representative: Schwabe - Sandmair - Marx
(86) International application number: PCT/JP2008/073659
(87) International publication number: WO 2009/084608

(57) **Abstract**

A portable terminal device includes a main control unit 11, a charging control unit 102, and a charging storage unit 100 including a first storage area (a pool area 100A) and a second storage area (a payment area 100B). The charging control unit 102 stores a received money amount in the first storage area of the charging storage unit 100 when electronic money is received. Electronic money is paid from the second storage area of the charging storage unit 100, The main control unit 11 transfers a part of the electronic money information stored in the first storage area of the charging storage unit 100 to the second storage area based on an operation of an operation unit 13.

## Description

### Technical Field

The present invention relates to a portable terminal device, a charging management component, and a program for controlling a portable terminal capable of processing electronic money via RFID (Radio Frequency Identification) communication.

An RAID tag refers to an 1C chip or resin card including a nonvolatile memory and a wireless communication (RFID communication) function therein. Recently, as the RFID tag, an IC chip or card having a high security function or a CPU has been introduced.

It is possible to exchange data for fee payment by using the RFID tag as a prepaid card or electronic money while holding the RFID tag over a reading terminal. Recently, an attempt to use a mobile phone instead of a ticket or a wallet has been made with an RFID tag built in a mobile phone.

Here, the "electronic money" refers to a monetary value represented in digital data and is used as a payment means for shopping without use of a credit card or cash, or for an electronic commercial transaction using the Internet or the like.

In the related art, mobile phones which handle electronic money have been proposed.
For example, it has been proposed an electronic money device which includes means for storing use purposes, an upper limit for each use purpose, a range of a money amount requires an authentication process, and the like, and means for storing authentication information, and which, in response to receiving the user selection of use purpose at the time of executing the payment process, determines whether a money amount is in an available range predetermined based on payment conditions and determines whether the money amount requires the authentication process. Accordingly, a flexible handling can be realized while putting the importance on convenience rather than security when a small amount of money is paid (for example, see Patent Document 1).
Patent Document 1: JP-A-2005-55958

### Disclosure of Invention

### Problem to be Solved by Invention

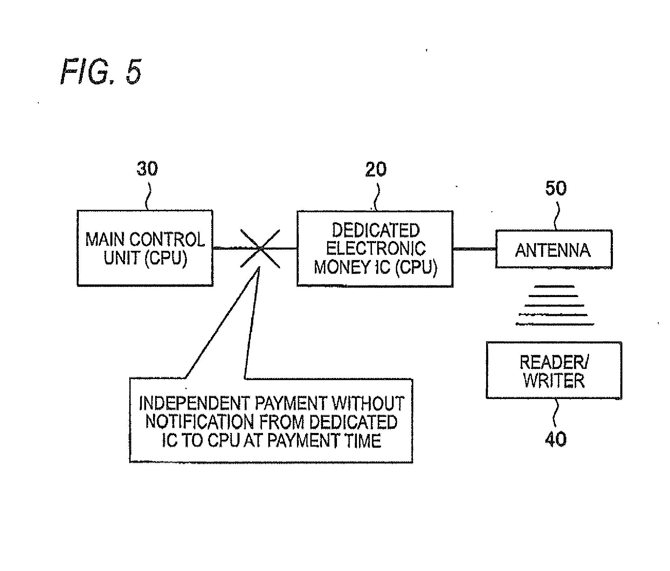

For example, in a mobile phone which handles electronic money as shown in Fig. 5, a dedicated electronic money management IC 20 for and a main control unit 30 serving as a control center of the mobile phone are each configured by an independent CPU.
In this configuration, the payment of electronic money input to a pool area (not shown) included in the electronic money management IC 20 is processed only by the electronic money management IC without involving the main control unit 11.
Charging information as a basis of payment is tirelessly transmitted via an antenna 50 from a reader/writer 40 installed in a shop or station ticket gate.

However, in the technique described in Patent Document 1, it is not sufficient to set an appropriate use limit (an upper limit of a use purpose) in response to the user's need.
It is complex to conduct detailed payment management while dividing use categories of electronic money into railroad-fare payment, shopping by cash in a shop, and the like.

An object of the present invention is to provide a portable terminal device which realizes an appropriate payment process within a use-limited range by a dedicated electronic money management IC according to a user's need. Another object of the present invention is to provide a portable terminal device, a charging management component, and a program for controlling a portable terminal which realizes a detailed payment management process.

### Means for Solving Problem

A portable terminal device according to an embodiment of the present invention, comprise, a communication unit which receives charging information; a charging storage unit which stores electronic money information; and a charging control unit which executes a charging process based on the charging information received by the communication unit, wherein the charging storage unit comprises at least two areas including a first storage area to which a received money amount is registered and a second storage area from which money is paid in the charging process.

The electronic money information registered in the first storage area may be transferred to the second storage area.

The portable terminal device may further comprise a charging control unit which executes a money receiving process of increasing electronic money information stored in the first storage area when the charging process is money receipt, and which executes a payment process of decreasing electronic money information stored in the second storage area when the charging process is payment.

The portable terminal device may further comprise an operation unit; and a main control unit which transfers a part of the electronic money information stored in the first storage area to the second storage area based on an operation of the operation unit.

A portable terminal device according to another embodiment of the present invention, comprises: an operation unit; a main control unit which receives an instruction input of the operation unit; a communication unit which receives charging information; a charging storage unit which stores electronic money information; and a charging control unit which executes a charging process for the electronic money information stored in the charging storage unit based on the charging information received by the communication unit; wherein the charging storage unit includes a first storage area and a second storage area, and wherein the charging control unit executes a money receiving process of increasing electronic money information stored in the first storage area when the charging process is money receipt, and executes a payment process of decreasing electronic money information stored in the second storage area when the charging process is payment.

The main control unit may transfer a part of the electronic money information stored in the first storage area to the second storage area based on an operation of the operation unit.

The portable terminal device may further comprise a notification unit which is controlled by the main control unit, wherein the charging control unit may determine whether a money amount to be paid based on the charging information received by the communication unit is within a money amount corresponding to the electronic money information stored in the second storage area, wherein when the money amount to be paid based on the charging information is greater, the charging control unit may transmit charging disapproval information by the communication unit and notifies the main control unit of charging disapproval, and wherein when the charging disapproval is notified, the main control unit may control the notification unit to notify the charging disapproval.

The charging storage unit may include a plurality of second storage areas for each charging category, and the charging control unit may execute the payment process for a second storage area corresponding to a charging category included in the charging information received by the communication unit, among the plurality of second storage areas.

The main control unit may display, on the notification unit, a remaining value based on the electronic money information stored in the first storage area of the charging storage unit when a request for transferring a part of the electronic money information from the first storage area to the second storage area is generated by the operation unit, and the main control unit may decrease the electronic money information stored in the first storage area according to a money amount input by the operation unit within a range of the displayed remaining value, and increase the electronic money information stored in the second storage area by a money amount same as the decreased money amount.

The charging storage unit may include a plurality of first storage areas for a plurality of types of management company, respectively, each management company managing electronic money, and each of the second storage areas may correspond to a single one of the first storage areas for respective types of management company.

A charging management component according to another embodiment of the present invention is included in a portable terminal device, the component comprising: a charging storage unit which stores electronic money information; a charging control unit which executes a charging process for the charging storage unit when charging information is received from an outside; and an interface unit which transmits and receives a signal to and from another control unit within the portable terminal device, wherein the charging storage unit includes: a first storage area which, when electronic money is received, stores electronic money information specifying the received electronic money; and a second storage area to which a part of the electronic money information stored in the first storage area is transferred and stored according to an instruction received via the interface unit.

A portable terminal device according to another embodiment of the present invention, comprises: an operation unit; a communication unit which receives charging information; a charging storage unit which stores electronic money information; and a control unit which executes a charging process for the electronic money information stored in the charging storage unit based on the charging information received by the communication unit, wherein the charging storage unit includes a first storage area and a plurality of second storage areas for each charging category, and wherein the control unit transfers a part of electronic money information stored in the first storage area to one of the plurality of second storage areas based on an operation of the operation unit.

The control unit may execute a money receiving process of increasing the electronic money information stored in the first storage area when the charging process is money receipt, and execute a payment process of decreasing the electronic money information stored in one of the plurality of second storage areas when the charging process is payment.

The control unit may execute the payment process for a second storage area corresponding to a charging category included in the charging information received by the communication unit.

The control unit may include a charging control unit which executes the charging process based on the charging information received by the communication unit, and a main control unit which transfers the part of the electronic money information stored in the first storage area to the second storage area based on the operation of the operation unit.

A program according to another embodiment of the present invention is for controlling a portable terminal including an operation unit, a communication unit which receives charging information, and a charging storage unit which stores electronic money information, the control program executing the steps of: transferring a part of electronic money information stored in a first area of the charging storage unit to a second area of the charging storage unit based on an operation of the operation unit; executing a money receiving process of increasing the electronic money information stored in the first area when a charging process based on the charging information is money receipt; and executing a payment process of decreasing electronic money information stored in the second area when the charging process based on the charging information is payment.

### Effects of Invention

According to a portable terminal device, a charging management component, and a control program of the present invention, it can be realized an appropriate payment process in a use-limited range by a dedicated electronic money management IC in response to a user's need. Additionally, a detailed payment management process can be realized.

### Brief Description of Drawings

Fig. 1 is a diagram showing an example of the system configuration of an electronic money management system to which a portable terminal device according to an embodiment of the present invention is connected.
Fig. 2 is block diagram showing the internal configuration of the portable terminal device according to an embodiment of the present invention.
Fig. 3 is a flowchart showing the operation of a payment area setting process of the portable terminal device according to an embodiment of the present invention.
Fig. 4 is a flowchart showing the operation of a payment process of the portable terminal device according to an embodiment of the present invention.
Fig. 5 is a block diagram showing a configuration example of a mobile phone which handles electronic money according to a related art.

### Explanation of Reference

- 1:: mobile phone
- 2:: communication server
- 3,6:: communication network
- 4:: electronic money management device
- 5:: reader/writer such as POS terminal
- 10:: RFID unit
- 11:: main control unit
- 12:: storage unit
- 13:: operation unit
- 14:: notifcation unit
- 15:: communication unit
- 100:: charging storage unit
- 100A:: pool area (first storage area)
- 100B:: payment area (second storage area)
- 101:: interface unit:
- 102:: charging control unit
- 103:: wireless communication unit

### Best Mode for Carrying out the Invention

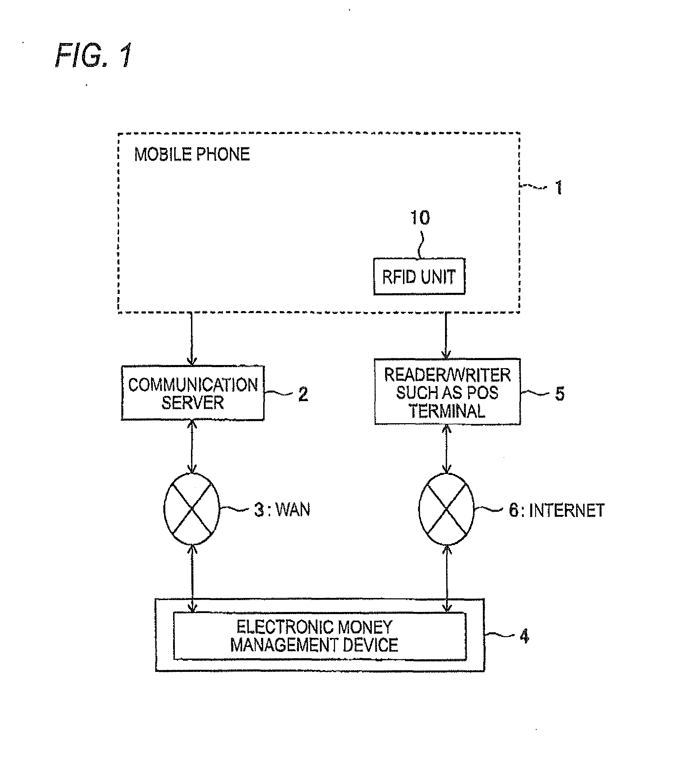

Fig. 1, is a diagram showing an example of the system configuration or an electronic money management system to which a portable terminal device according to an embodiment of the present invention is connected.

In Fig. 1, a mobile phone 1 including RFID unit 10 therein as a dedicated electronic money management IC (charging management component) is shown as a portable terminal device. The mobile phone 1 is connected to a communication server 2 of a communication common carrier and an electronic money management device 4, which is a provider server of electronic money, via a communication network 3 such as a WAN (Wide Area Network).

The mobile phone 1 is capable of using electronic money by employing the RID unit 10, so that balance confirmation, payment, or the like is available.
The mobile phone 1 is capable or receiving money by connecting to a charge terminal (not shown), which is connected to the electronic money management device 4.
Further, the mobile phone 1 is capable of executing the payment process by holding the mobile phone 1 over a reader/writer 5 such as a POS (Point Of Sale) terminal installed in a shop or the like. The reader/writer 5 is connected to the electronic money management device 4 via a communication network 6 such as the Internet or the like.

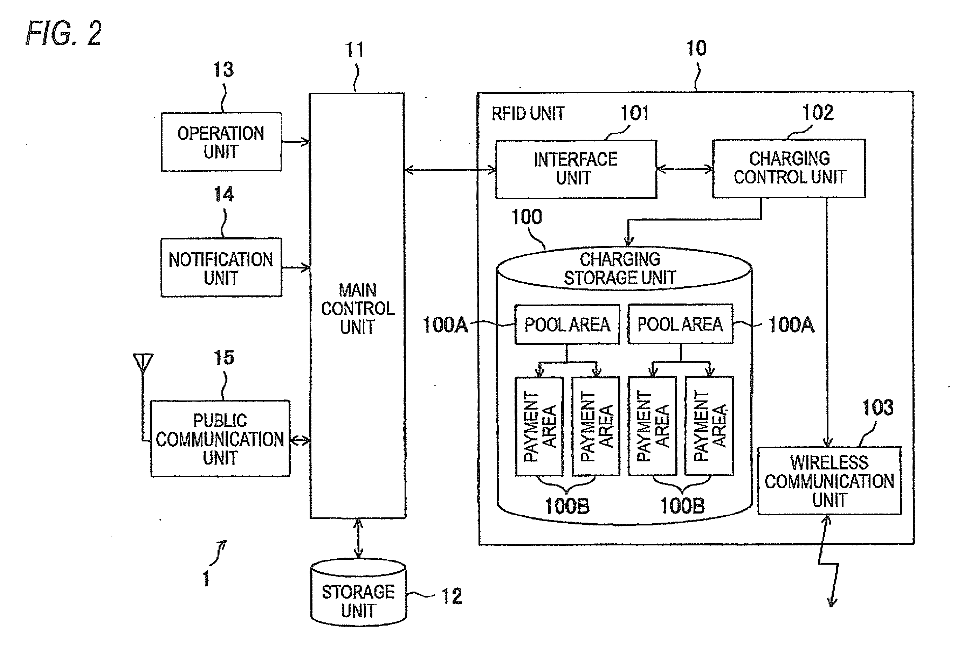

Fig. 2 is a block diagram showing the internal configuration of the mobile phone 1 shown in Fig. 1. As shown in Fig. 2, the mobile phone 1 includes a main control unit 11, the RFID unit 10, a storage unit 12, an operation unit 13, a notification unit 14, and a public communication unit 15. The main control unit 11 controls each part of the mobile phone 1.

The RFID unit 10 includes a charging storage unit 100, an interface unit 101, a charging control unit 102, and a wireless communication unit 103. The wireless communication unit 103 includes an antenna (not shown).

The charging storage unit 100 includes first storage areas (pool areas 100A) and second storage areas (payment areas 100B) which store electronic money information. The electronic money information is increased and decreased by charging information received from the reader/writer 5 wirelessly connected via the wireless communication unit 103.
Herein, a plurality of payment areas 100B is provided for each charging category such as a railroad commuting ticket, shopping by cash, or credit for a single pool area 100A. An upper limit of use of each category may be predetermined. Characteristically, the electronic money is decreased only from the payment area 100B when a payment process is executed.

A plurality of pool areas may be provided for each electronic money management company. In this case, a payment area for each charging category may be associated with each pool area. That is, the association is made so that electronic money is not transferred from a plurality of pool areas to one payment area since the charging situation is separately managed for each management company.

The interface unit 101 functions as an interface between the main control unit 11 and the RFID unit 10 (the charging control unit 102).

The charging control unit 102 includes a CPU therein and has a function of executing the charging process for the charging storage unit 100 based on charging information received by the wireless communication unit 103 to be described later.
Specifically, when electronic money is received from the electronic money management device 4 (or a charge terminal (not shown)), the charging control unit 102 stores a received money amount in the pool area 100A of a corresponding management company of the charging storage unit 100, and pays electronic money from the payment area 100B of a corresponding management company in the charging storage unit 100 based on charging information received from the reader/writer S.
As described later, the main control unit 11 is capable of transferring a part of electronic money information stored in the pool area 100A of the charging storage unit 100 to the payment area 100B based on an operation of the operation unit 13.

The charging control unit 102 determines whether charging information received by the wireless communication unit 103 is within the money amount stored in the payment area 100B of the charging storage unit 100. When the money amount indicated by charging information is greater, the charging control unit 102 transmits charging disapproval information by the wireless communication unit 103 and notifies the main control unit 11 of the charging disapproval.
The charging control unit 102 determines which one of the plurality of payment areas 100B money is paid from, based on information indicating a charging category and a charging management company included in the charging information received by the wireless communication unit 103.

The wireless communication unit 103 receives power supplied from the reader/writer 5, and performs wireless communication between the mobile phone 1 and the reader/writer 5 via the RFID unit 10.
In a state where communication by the RFID unit 10 is available, the charging storage unit 100, the interface unit 101, and the charging control unit 102 operate while receiving power supplied from a battery (not shown) included in the mobile phone 1. A wireless link is shown for communication, but a direct connection of a wired link or the like, not the wireless link, may be used.

The main control unit 11 entirely controls the overall operation of the mobile phone 1.
That is, the main control unit 11 controls the operation of the RFID unit 10, the storage unit 12, the operation unit 13, the notification unit 14, and the communication unit 15 so that various processes or the mobile phone 1 (audio communication via a telephone switching network, the creation and transmission/reception of electronic mail, the control of reading or the like of Web (World Wide Web) sites of the Internet, and the transfer of electronic money) are executed in an appropriate procedure in response to an operation of the operation unit 13.

The main control unit 11 has a CPU (microprocessor) to execute a process based on a program (an operating system, an application, or the like) stored in the storage unit 12. The process is executed according to a procedure indicated in the program.
That is, a process is executed by sequentially reading command codes from the operating system or the running application program stored in the storage unit 12. The application program stored in the storage unit 12 may be downloaded from the communication unit 15 via the Internet.

Here, when a request for transferring a part or the electronic money from a pool area 100A of the charging storage unit 100 of the RFID unit 10 to a payment area 100B is generated by the operation unit 13, the main control unit 11 outputs a remaining value based on electronic money information stored in the pool area 100A of the charging storage unit 100 to the notification unit 14. A control operation is performed to decrease the money amount input by the operation unit 13 within a displayed remaining value range from the pool area 100A of the charging storage unit 100 and to increase the money amount in the payment area 100B of the charging storage unit 100 by the decreased money amount. The electronic money may be transferred based on a request from a unit other than the operation unit 13. For example, a request for transferring a part of electronic money may be made by operating the reader/writer 5.
When the charging disapproval is notified from the charging control unit 102, the main control unit 11 controls the notification unit 14 to notify the charging disapproval.

The storage unit 12 stores various data to be used for a process in the main control unit 11. For example, the storage unit 12 stores an application program to be executed by the main control unit 11, address book data for managing personal information such as a phone number of a communication partner or an electronic mail address, transmission/reception history data of a phone call or mail, schedule data, an audio file for reproducing a ring tone or an alarm tone, various setting data, and temporary data for use in processing a program.
For example, the above-described storage unit 12 is configured by a nonvolatile storage device (flash memory), a randomly accessible storage device (SRAM or DRAM), or the like.

For example, the operation unit 13 has a plurality of keys to which various functions are assigned such as a power key, a call key, numeric keys, character keys, direction keys, an enter key, a send key, and the like. When the keys are operated by an operator, the operation unit 12 generates a signal corresponding to operation content and inputs the generated signal as an instruction of the operator to the main control unit 11.

The notification unit 14 is configured by, for example a display device such as an LCD panel or an organic EL (Electro-Luminescence) panel. Here, an LCD module including the RAM 160 incorporated therein to store image data is used.
The notification unit 14 displays an image corresponding to a video signal supplied from the main control unit 11. Specifically, the image includes information regarding a money amount used by electronic money payment and an insufficient money amount as well as a phone number of a transmission source upon transmission, a phone number of a reception counterpart upon reception, a reception mail, or a transmission mail. An audio output by a speaker may be substituted therefor.

The public communication unit 15 catches a plurality of communication systems, and, for example, performs wireless communication with the communication server 2 of the communication common carrier in accordance with a communication protocol such as COMA 2000 1x (hereinafter, referred to as 1x), EVDO, or a wireless LAN. A money receiving process or a transmission/reception process for charging information is executed with the electronic money management device 4 connected via the communication server 2 and the communication network 3 such as a WAN.

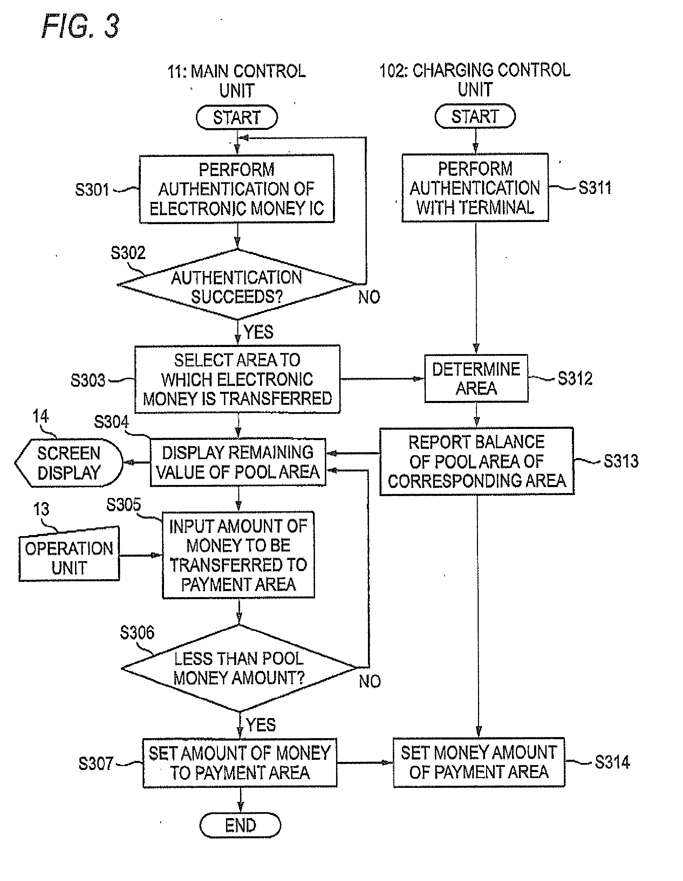

Fig. 3 is a flowchart showing the operation of a payment area setting process of the portable terminal device according to an embodiment of the present invention. Here, the operation flow in each of the main control unit 11 and the charging control unit 102 and the relationship therebetween are shown.
Hereinafter, the operation of the payment area setting process of the portable terminal device according to an embodiment of the present invention will be described with reference to the flowchart shown in Fig. 3.

When electronic money is used, at first, each device authentication process between the main control unit 11 and the charging control unit 102 is executed (steps S301 and S311).
When the authentication has succeeded (step S302 "Yes"), the main control unit 11 selects an payment area 100B allocated to the charging storage unit 100 to which electronic money is transferred (step S303). The main control unit 11 notifies the charging control unit 102 of the selected payment area 100B via the interface unit 101, and the charging control unit 102 receiving the notification determines the payment area 100B in the charging storage area 100 (step S312).

Subsequently, the charging control unit 102 determines a pool area 100A from which electronic money can be transferred to the selected payment area 100B, and notifies the main control unit 11 of a remaining value of the pool area 100A (step S313). The main control unit 11 receiving the notification displays the remaining value of the pool area 100A, on the notification unit 14 (step S304).

The user who has read the remaining value of the pool area 100A displayed on the notification unit 14 inputs a money amount to be transferred to the payment area 100B for each charging category prepared for a management company selected by operating the operation unit 13 (step S305).
Subsequently, the main control unit 11 which has acquired the money amount input via the operation unit 13 compares the input money amount with the pool remaining value (step S306). When it is confirmed that the input money amount is within the pool remaining value (step S306 "Yes"), the main control unit 11 sends a notification (an input money amount setting notification) to the charging control unit 102 so that the money amount input to the payment area 100B is set. Then, the payment area setting process by the main control unit 11 ends (step S307).
When the input money amount exceeds the pool remaining value (step S306 "No"), the main control unit 11 returns to step S304 (the process of displaying the remaining value of the pool area 100A).

On the other hand, the charging control unit 102 receives the input money amount setting notification from the main control unit 11, sets the money amount to the payment area 100B of the charging storage unit 100, and ends a setting process for the payment area 100B (step S314).

That is, when a request for transferring a part of the electronic money from the pool area 100A of the charging storage unit 100 to the payment area 100B is generated by the operation unit 13, the main control unit 11 displays a remaining value based on the electronic money information stored in the pool area 100A of the charging storage unit 100, on the notification unit 14, subtracts the money amount input by the operation unit 13 within a displayed remaining value range from the pool area 100A of the charging storage unit 100, and adds the money amount same as the subtracted money amount to the payment area 100B of the charging storage unit 100. At this time, the electronic money is transferred only within an area for a corresponding management company.

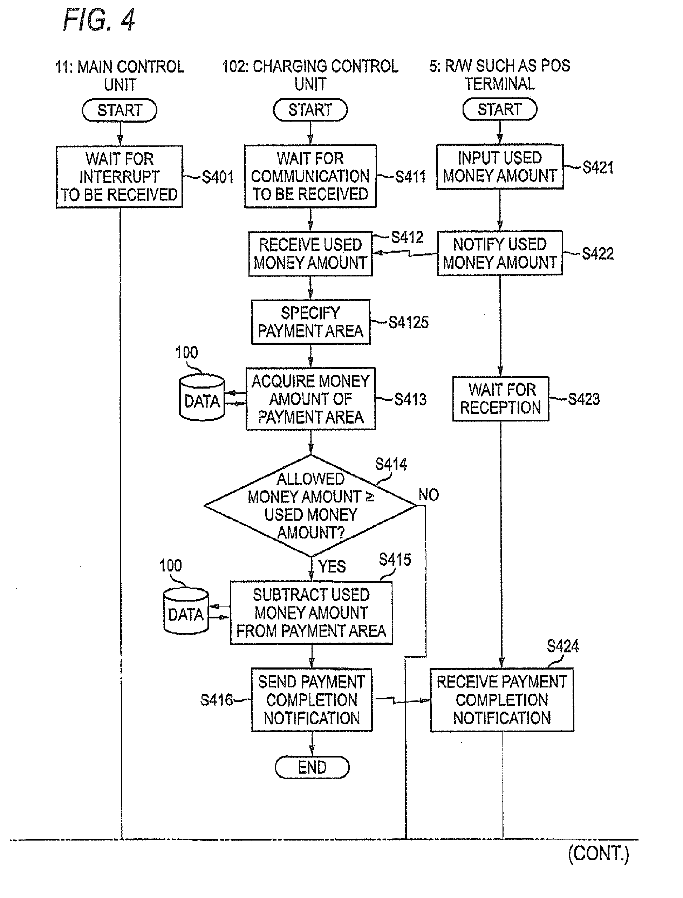

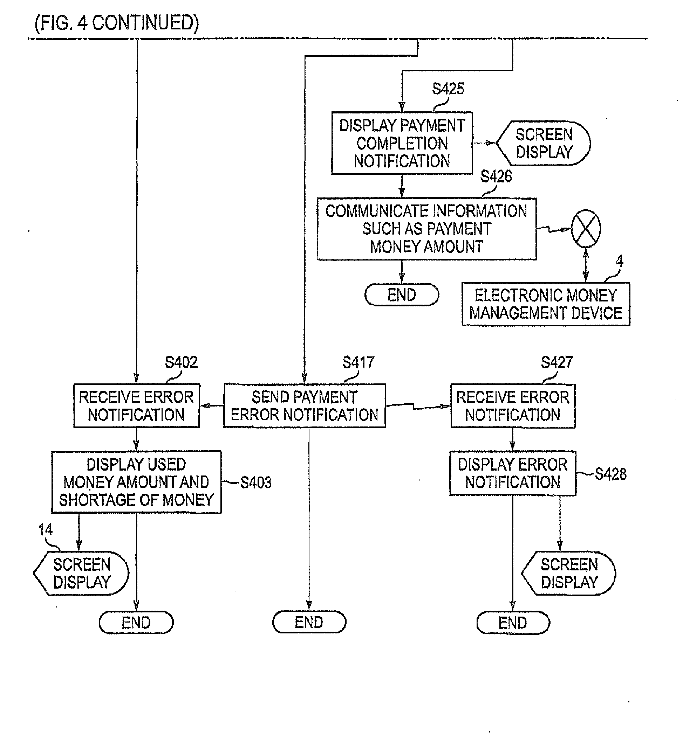

Fig. 4 is a flowchart showing a payment processing operation of the portable terminal device according to an embodiment of the present invention. Here, the operation flow in each of the main control unit 11, the charging control unit 102, and the reader/writer 5 and the relationship there between are shown.
Hereinafter, the payment processing operation of the portable terminal device according to an embodiment of the present invention will be described with reference to the flowchart shown in Fig. 4.

The main control unit 11 is assumed to basically wait for an interrupt to be received in a sleep state the electronic money payment process (step S401).
As the user holds the mobile phone 1 over the reader/writer 5 at a product purchase, a communication link is set up between the mobile phone 1 and the reader/writer 5. Also, the charging control unit 102 specifies a management company by acquiring information specifying a charging management company from the reader/writer 5.
At this time, the charging control unit 102 is in a state of waiting for communication from the reader/writer 5 (step S411).
Here, when a shop clerk inputs a used money amount by operating the reader/writer 5 (step S421), the reader/writer 5 notifies the charging control unit 102 of information indicating the used money amount, a charging category, and a type of management company (step S422), and becomes in a state of waiting for a payment completion notification to be received from the charging control unit 102 (step S423).

The charging control unit 102 which has received the used money amount (step S412) specifies one of payment areas 100B of the charging storage unit 100 based on the notified management company type and charging category (step S4125), By referring thereto, a money amount set to the previously specified payment area 100B is acquired (step S413). Then, it is determined whether the used money amount exceeds an allowed payment amount (step S414).

Here, if it is determined that the used money amount is in the range of the allowed payment amount (step S414 "Yes"), the charging control unit 102 subtracts the used money amount from the payment area 100B specified at step S4125 (step S415). Then, a payment completion notification is transmitted to the reader/writer 5 via the wireless communication unit 103 (step S416).

The reader/writer 5 which has received the payment completion notification (step S424) displays the notification on a display device thereof (step S425). The public communication unit 15 transmits information regarding the payment amount to the electronic money management device 4 via the communication network 6 (step S426).

On the other hand, if it is determined that the used money amount exceeds the range allowed for a payment amount in the process of step S414 (step S414 "No"), the charging control unit 102 ends the of payment processes by issuing a payment error notification in both directions to the main control unit 11 and the reader/writer 5 (step S417). At this time, an interrupt signal is input to the main control unit 11 and the sleep state is released.

The main control unit 11 which has received the payment error notification (step S402) ends the payment process by outputting the used amount of money and the insufficient amount of money to the notification unit 14 (step S403). Also, the reader/writer 5 which has received the payment error notification (step S427) ends the payment process by displaying the notification on the display device thereof (step S428).

That is, the charging control unit 102 determines whether the charging information received by the wireless communication unit 103 is within the money amount stored in the payment area 100B (the second storage area) of the charging storage unit 100. When the money amount indicated by the charging information is greater, the charging control unit 102 transmits charging disapproval information to the reader/writer 5 by the wireless communication unit 103, and notifies the main control unit 11 of the charging disapproval. When the charging disapproval is notified, the charging control unit 102 controls the notification unit 14 to notify the charging disapproval.

In the above-described portable terminal device according to the embodiment of the present invention, the main control unit 11 is capable of executing a payment process within a limited range while a sleep state is maintained. Therefore, power can be saved, a time taken for the payment process can be shortened, and an appropriate charging process in response to the user's need can be realized.
Further, detailed payment management can be realized since the user sets a money amount to be used in detail for each charging category and a payment process is executed based on a comparison with the set value. Also, a simple payment process can be realized without deteriorating the convenience according to a charging category such as a payment process in a railroad ticket gate, a payment process for a small amount of money, or the like.

In contrast, when the main control unit 11 is not in sleep mode, the following use is also possible. For example, the main control unit sets an upper limit of an available money amount and stores the upper limit of the available money amount in the storage unit 12. Thereupon, the charging control unit 102 is capable of requesting the main control unit 11 to confirm a set amount of the storage unit 12 as well as a remaining value of the payment area 100B at the time of executing the payment process, recognizing a lower value of the remaining value of the payment area 100B and the set amount of the storage unit 12 as an upper-limit amount, and determining whether charging is allowable within a range of the upper-limit amount.
That is, it is possible to doubly set an upper limit for charging by at the side of the main control unit 11, For example, the main user sets 5000 yen to the payment area 100B, but it is possible to extend the breadth of use as in the case where the upper limit is newly set to 1000 yen when renting the portable terminal device.

An example in which electronic money is input (charged) in advance according to the above-described embodiment has been described, but a credit method or the like for post payment is also applicable as the charging category.
An example of a mobile phone including RAID chip therein as a portable terminal device has been described, but the similar control operation may be performed by integrating an RFID card to which monetary value data is recorded and software in which monetary value data is managed into a PC or the like.

All functions of configuration blocks provided in the portable terminal device shown in Fig. 2 may be implemented by software, or at least a part thereof may be implemented by hardware. For example, data processing in the main control unit 11 and the charging control unit 102 of the RFID unit 10 may be implemented on a computer by one or more programs, and at least a part thereof may be implemented by hardware.

While the present invention has been described in detail and with reference to specific embodiments thereof, it will be apparent to one skilled in the art that various changes and modifications can be made therein without departing from the spirit and scope thereof.
This application is based on Japanese Patent Application No. 2007-338321 filed on Dec. 27, 2007, the contents of which are hereby incorporated by reference.

## Claims

1. A portable terminal device comprising:
a communication unit which receives charging information;
a charging storage unit which stores electronic money information; and
a charging control unit which executes a charging process based on the charging information received by the communication unit,
wherein the charging storage unit comprises at least two areas including a first storage area to which a received money amount is registered and a second storage area from which money is paid in the charging process.

2. The portable terminal device according to claim 1,
wherein the electronic money information, registered in the first storage area is transferred to the second storage area.

3. The portable terminal device according to claim 2, further comprising:
a charging control unit which executes a money receiving process of increasing electronic money information stored in the first storage area when the charging process is money receipt, and which executes a payment process of decreasing electronic money information stored in the second storage area when the charging process is payment.

4. The portable terminal device according to claim 3, further comprising:
an operation unit; and
a main control unit which transfers a part of the electronic money information stored in the first storage area to the second storage area based on an operation of the operation unit.

5. A portable terminal device comprising:
an operation unit;
a main control unit which receives an instruction input of the operation unit;
a communication unit which receives charging information;
a charging storage unit which stores electronic money information; and
a charging control unit which executes a charging process for the electronic money information stored in the charging storage unit based on the charging information received by the communication unit,
wherein the charging storage unit includes a first storage area and a second storage area, and
wherein the charging control unit executes a money receiving process of increasing electronic money information stored in the first storage area when the charging process is money receipt, and executes a payment process of decreasing electronic money information stored in the second storage area when the charging process is payment.

6. The portable terminal device according to claim 5,
wherein the main control unit transfers a part of the electronic money information stored in the first storage area to the second storage area based on an operation of the operation unit

7. The portable terminal device according to claim 5 or 6, further comprising:
a notification unit which is controlled by the main control unit,
wherein the charging control unit determines whether a money amount to be paid based on the charging information received by the communication unit is within a money amount corresponding to the electronic money information stored in the second storage area,
wherein when the money amount to be paid based on the charging information is greater, the charging control unit transmits charging disapproval information by the communication unit and notifies the main control unit of charging disapproval, and
wherein when the charging disapproval is notified, the main control unit controls the notification unit to notify the charging disapproval.

8. The portable terminal device according to any one of claims 5 to 7,
wherein the charging storage unit includes a plurality of second storage areas for each charging category, and
wherein the charging control unit executes the payment process for a second storage area corresponding to a charging category included in the charging information received by the communication unit, among the plurality of second storage areas.

9. The portable terminal device according to claim 7,
wherein the main control unit displays, on the notification unit, a remaining value based on the electronic money information stored in the first storage area of the charging storage unit when a request for transferring a part of the electronic money information from the first storage area to the second storage area is generated by the operation unit, and
wherein the main control unit decreases the electronic money information stored in the first storage area according to a money amount input by the operation unit within a range of the displayed remaining value, and increases the electronic money information stored in the second storage area by a money amount same as the decreased money amount.

10. The portable terminal device according to claim 8,
wherein the charging storage unit includes a plurality of first storage areas for a plurality of types of management company, respectively, each management company managing electronic money, and
wherein each of the second storage areas corresponds to a single one of the first storage areas for respective types of management company.

11. A charging management component included in a portable terminal device, the component comprising:
a charging storage unit which stores electronic money information;
a charging control unit which executes a charging process for the charging storage unit when charging information is received from an outside; and
an interface unit which transmits and receives a signal to and from another control unit within the portable terminal device,
wherein the charging storage unit includes:
a first storage area which, when electronic money is received, stores electronic money information specifying the received electronic money; and
a second storage area to which a part of the electronic money information stored in the first storage area is transferred and stored according to an instruction received via the interface unit.

12. A portable terminal device comprising:
an operation unit;
a communication unit which receives charging information;
a charging storage unit which stores electronic money information; and
a control unit which executes a charging process for the electronic money information stored in the charging storage unit based on the charging information received by the communication unit,
wherein the charging storage unit includes a first storage area and a plurality of second storage areas for each charging category, and
wherein the control unit transfers a part of electronic money information stored in the first storage area to one of the plurality of second storage areas based on an operation of the operation unit.

13. The portable terminal device according to claim 12,
wherein the control unit executes a money receiving process of increasing the electronic money information stored in the first storage area when the charging process is money receipt, and executes a payment process of decreasing the electronic money information stored in one of the plurality of second storage areas when the charging process is payment.

14. The portable terminal device according to claim 13,
wherein the control unit executes the payment process for a second storage area corresponding to a charging category included in the charging information received by the communication unit.

15. The portable terminal device according to claim 14,
wherein the control unit includes:
a charging control unit which executes the charging process based on the charging information received by the communication unit; and
a main control unit which transfers the part of the electronic money information stored in the first storage area to the second storage area based on the operation of the operation unit.

16. A program for controlling a portable terminal including an operation unit, a communication unit which receives charging information, and a charging storage unit which stores electronic money information, the control program executing the steps of:
transferring a part of electronic money information stored in a first area of the charging storage unit to a second area or the charging storage unit based on an operation of the operation unit;
executing a money receiving process of increasing the electronic money information stored in the first area when a charging process based on the charging information is money receipt; and
executing a payment process of decreasing electronic money information stored in the second area when the charging process based on the charging information is payment.
